# EUROPÄISCHE PATENTANMELDUNG

(11) **EP 3 789 100 A1**
(43) Veröffentlichungstag der Anmeldung: **10.03.2021**
(21) Anmeldenummer: 19195943.6
(22) Anmeldetag: 06.09.2019
(51) Int. Cl.: B01D 53/04, B01J 41/07, B01J 49/07, B01J 49/40

(54) **VERFAHREN ZUR DESORPTION VON KOHLENDIOXID AUS POLYMEREN ORGANISCHEN ANIONENAUSTAUSCHERN**

(71) Anmelder: LANXESS Deutschland GmbH, 50569 Köln (DE)
(72) Erfinder: NEUMANN, Stefan, 51375 Leverkusen (DE); OCHSMANN, Christian, 52355 Düren (DE)

(57) **Zusammenfassung**

Die Erfindung betrifft ein Verfahren zur Desorption von Kohlendioxid aus polymeren organischen Anionenaustauschern mit primären und/oder sekundären Amingruppen, an denen das Kohlendioxid als Carbamat gebunden wird, mittels Erwärmung durch Mikrowellenstrahlung.

## Beschreibung

Die Erfindung betrifft ein Verfahren zur Desorption von Kohlendioxid aus polymeren organischen Anionenaustauschern mit primären und/oder sekundären Amingruppen, an denen das Kohlendioxid als Carbamat gebunden wird, mittels Erwärmung durch Mikrowellenstrahlung.

In der WO-A-00/02643 wird ein regeneratives Verfahren zur Adsorption von CO₂ beschrieben. Dabei wird ein makroporöser Ionenaustauscher mit primären Benzylamingruppen eingesetzt. Es wird dabei aus Atemluft das metabolisch kontinuierlich produzierte Kohlenstoffdioxid entfernt. Die CO₂ reiche Luft wird mittels eines Lüfters durch eine lonenaustauscherharzschüttung geführt. Beim Durchströmen der Schüttung werden die CO₂-Moleküle an den funktionellen primären Benzylamingruppen gebunden und das durchströmende Medium entsprechend abgereichert. Die Regeneration des Harzes und damit die Desorption von CO₂ kann mittels leicht überhitztem Wasserdampf bei atmosphärischen Bedingungen oder durch Unterdruck, mit oder ohne Erwärmung oder mittels erwärmter oder nicht erwärmter CO₂- freier Luft erfolgen.

Die EP-B-2490789 beschreibt einen makroporösen, kreuzvernetzten, polystyroldivinylbenzol basierten Ionenaustauscher mit primären Benzylamingruppen, die durch alkalische Hydrolyse von Phthalimidgruppen hergestellt wurden, der für die CO₂ Entfernung aus Synthesegasen geeignet ist. Vorrangig werden hierbei die Kohlendioxidmoleküle durch Carbamatbildung chemisch an die Polymermatrix gebunden. Das gebundenen CO₂ wird durch eine Variation der Temperatur, durch das sogenannte "temperature swing", oder durch eine Kombination aus Temperatur "temperature swing" und Druckvariation, "pressure swing", wieder desorbiert.

Auch aus der WO-A-2018/233949 sind basische Anionenaustauscher mit primären Benzylamingruppen, die durch alkalische Hydrolyse von Phthalimidgruppen hergestellt wurden und die zur CO₂ Entfernung eingesetzt werden können, bekannt. Auch gemäß der WO-A-2018/233949 erfolgt die Desorption des an dem Anionenaustauscher gebundenen CO₂ mittels leicht überhitztem Wasserdampf bei atmosphärischen Bedingungen oder durch Unterdruck, mit oder ohne Erwärmung oder mittels erwärmter oder nicht erwärmter CO₂- freier Luft.

Die Art der Desorption von an Ionenaustauschern chemisorptiv, physiosorptiv oder/und chemisch gebundenem CO₂ ist u.a. von dem Verlauf der Druck- und/oder Temperaturverteilung, die zur Desorption des CO₂ in dem Ionenaustauscher vorliegen muss, abhängig. Diese ist bei der Verwendung sämtlicher, oben dargestellter bekannten Methoden zur Desorption häufig ungleichmäßig oder/und zu langsam und daher nicht effizient. Es bestand daher weiterhin ein Bedürfnis nach einem Verfahren zur Desorption von CO₂ aus polymeren organischen Anionenaustauschern mit primären und/oder sekundären Amingruppen mit dem die Nachteile des Standes der Technik überwunden werden können.

Überraschend wurde gefunden, dass mittels Erwärmung durch Mikrowellenstrahlung CO₂ aus speziellen polymeren organischen Anionenaustauschern mit primären und/oder sekundären Amingruppen desorbiert werden kann und die Nachteile des Standes der Technik überwunden werden können. Dies war insbesondere auch deshalb überraschend, da aus Meredith R.J. (1998), Engineers' Handbook of Industrial Microwave Heating, Exeter, S. 29, The Institution of Engineering and Technology, London, United Kingdom, Lightening Source UK Ltd., Printed in UK by Short Run Press Ltd. bekannt ist, dass Polystyrol für die Erwärmung mittels Mikrowellenstrahlung ungeeignet ist. So beträgt der Mikrowellenabsorptionskoeffizient, der ein Maß für die Fähigkeit eines Materials Mikrowellen zu absorbieren darstellt, für Polystyrol lediglich 0,3 tan αδ x 10³, während dessen er für Wasser 169 tan αδ x 10³ beträgt, welches bekanntlich sehr gut mittels Mikrowellen erwärmt werden kann.

Die Erfindung betrifft daher ein Verfahren zur Desorption von Kohlenstoffdioxid von zumindest einem Anionenaustauscher enthaltend ein Polystyrol-Copolymer mit funktionellen Gruppen der Formel (I) 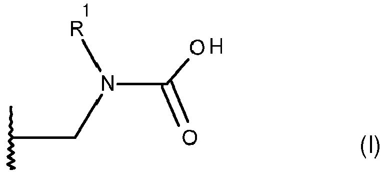 wobei 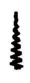 ein Polystyrol-Copolymergerüst darstellt und
R¹ für C₁-C₆-Alkyl und/oder H stehen kann und die Methylengruppe in der Formel (I), die an dem Stickstoffatom gebunden ist, an einem aromatischen Rest in dem Polystyrol-Copolymeren gebunden ist, durch Temperaturerhöhung mittels Mikrowellenstrahlung und optional durch Druckreduktion.

Das Polystyrol-Copolymer des Anionenaustauschers enthaltend Polystyrol-Copolymere mit funktionellen Gruppen der Formel (I) ist bevorzugt vernetzt. Ein vernetztes Polystyrol-Copolymer wird auch als Perlpolymerisat bezeichnet. Besonders bevorzugt ist das Polystyrol-Copolymer der Anionenaustauscher enthaltend Polystyrol-Copolymere mit funktionellen Gruppen der Formel (I) ein Styrol/Divinylbenzol vernetztes Copolymer.

Der Vernetzungsgrad des vernetzten Polystyrol-Copolymer der Anionenaustauscher enthaltend Polymere mit funktionellen Gruppen der Formel (I) beträgt vorzugsweise 1 Gew.% bis 80 Gew.%, besonders bevorzugt 2 Gew.% bis 25 Gew.% und ist das prozentuale Verhältnis der Masse der vernetzenden, eingesetzten multiethylenisch, ungesättigten Monomeren zu der Gesamtmasse aller Monomeren. Ganz besonders bevorzugt beträgt der Vernetzungsgrad 2 Gew.% bis 10 Gew.%.

Im vorliegenden bevorzugten Fall, bei dem der Anionenaustauscher enthaltend Polystyrol-Copolymere mit funktionellen Gruppen der Formel (I) ein Styrol/Divinylbenzol vernetztes Copolymer ist, handelt es sich bei den im Herstellungsverfahren einzusetzenden Monomeren um Styrol und Divinylbenzol.

Als Anionenaustauscher enthaltend Polystyrol-Copolymere mit funktionellen Gruppen der Formel (I) können mikroporöse oder gelförmige bzw. makroporöse, Anionenaustauscher eingesetzt werden.

Die Begriffe mikroporös oder gelförmig bzw. makroporös sind aus der Fachliteratur bekannt, beispielsweise aus Seidl et al., Adv. Polymer Sci., Vol. 5, Seiten 113 - 213 (1967).

Im Sinne der Erfindung bedeutet der Begriff makroporös, dass der Anionenaustauscher enthaltend Polystyrol-Copolymere mit funktionellen Gruppen der Formel (II) einen mittleren Porendurchmesser von vorzugsweise 100 bis 900 Angström, bevorzugt von 100 bis 550 Angström, aufweist.

Bevorzugt werden makroporöse Anionenaustauscher enthaltend Polystyrol-Copolymere mit funktionellen Gruppen der Formel (I) eingesetzt.

Ganz besonders bevorzugt handelt es sich bei den Anionenaustauschern enthaltend Polystyrol-Copolymere mit funktionellen Gruppen der Formel (I) um makroporöse, Styrol/Divinylbenzol vernetzte Copolymerisate, bei denen R¹ Wasserstoff ist.

Bevorzugt ist der Anionenaustauscher enthaltend Polystyrol-Copolymerisate mit funktionellen Gruppen der Formel (I) mit 0,2 bis 3,0 mol CO₂ pro kg getrocknetem Anionenaustauscher beladen.

Bevorzugt wird der Anionenaustauscher enthaltend Polystyrol-Copolymer mit funktionellen Gruppen der Formel (I) durch Adsorption von Kohlendioxid an mindestens einem Anionenaustauscher enthaltend Polystyrol-Copolymeren mit funktionellen Gruppen der Formel (II) 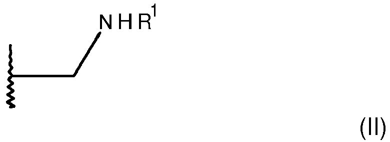 wobei 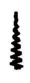 ein Polystyrol-Copolymergerüst darstellt und
R¹ für C₁-C₆-Alkyl und/oder H stehen kann, und die Methylengruppe in der Formel (II), die an dem Stickstoffatom gebunden ist, an einem aromatischen Rest in dem Polystyrol-Copolymeren gebunden ist, hergestellt.

R¹ ist vorzugsweise Methyl, Ethyl, n-Propyl, s-Propyl, n-Butyl, s-Butyl, t-Butyl und Wasserstoff. Besonders bevorzugt ist R¹ Wasserstoff.

Das Polystyrol-Copolymer des Anionenaustauschers enthaltend Polystyrol-Copolymere mit funktionellen Gruppen der Formel (II) ist bevorzugt vernetzt. Besonders bevorzugt ist das Polystyrol-Copolymer der Anionenaustauscher enthaltend Polystyrol-Copolymere mit funktionellen Gruppen der Formel (II) ein Styrol/Divinylbenzol vernetztes Copolymer.

Der Vernetzungsgrad des vernetzten Polystyrol-Copolymer der Anionenaustauscher enthaltend Polymere mit funktionellen Gruppen der Formel (II) beträgt vorzugsweise 1 Gew.% bis 80 Gew.%, besonders bevorzugt 2 Gew.% bis 25 Gew.% und ist das prozentuale Verhältnis der Masse der vernetzenden, eingesetzten multiethylenisch, ungesättigten Monomeren zu der Gesamtmasse aller Monomeren. Ganz besonders bevorzugt beträgt der Vernetzungsgrad 2 Gew.% bis 10 Gew.%.

Divinylbenzol ist ein multiethylenisch, ungesättigter Monomer.

Im vorliegenden bevorzugten Fall, bei dem der Anionenaustauscher enthaltend Polystyrol-Copolymere mit funktionellen Gruppen der Formel (II) ein Styrol/Divinylbenzol vernetztes Copolymer ist, handelt es sich bei den im Herstellungsverfahren einzusetzenden Monomeren um Styrol und Divinylbenzol.

Bevorzugt werden makroporöse Anionenaustauscher enthaltend Polystyrol-Copolymere mit funktionellen Gruppen der Formel (II) eingesetzt.

Die in dem Verfahren zur Adsorption von Kohlendioxid einzusetzenden Anionenaustauscher enthaltend Polystyrol-Copolymere mit funktionellen Gruppen der Formel (II) können in heterodisperser oder monodisperser Form vorliegen.

Als monodispers werden in der vorliegenden Anmeldung solche Stoffe bezeichnet, bei denen mindestens 90 Volumen- oder Massen-% der Teilchen einen Durchmesser besitzen, der in dem Intervall mit der Breite von +/- 10 % des häufigsten Durchmessers um den häufigsten Durchmesser herum liegt. Beispielsweise liegen dann bei einem Anionenaustauscher enthaltend Polystyrol-Copolymere mit funktionellen Gruppen der Formel (II) dessen Kügelchen einen häufigsten Durchmesser von 0,50 mm aufweisen, mindestens 90 Volumen- oder Massen-% in einem Größenintervall zwischen 0,45 mm und 0,55 mm, oder bei einem Anionenaustauscher enthaltend Polystyrol-Copolymere mit funktionellen Gruppen der Formel (II), dessen Kügelchen einen häufigsten Durchmesser von 0,70 mm aufweisen mindestens 90 Volumen- oder Massen-% in einem Größenintervall zwischen 0,77 mm und 0,63 mm.

Als heterodispers werden in der vorliegenden Anmeldung alle Teilchenverteilungen bezeichnet, bei denen die Teilchen nicht gemäß der monodispersen Verteilungsdefinition verteilt sind.

Bevorzugt werden heterodisperse Anionenaustauscher enthaltend Polystyrol-Copolymere mit funktionellen Gruppen der Formel (II) in dem Verfahren zur Adsorption von Kohlendioxid eingesetzt.

Ganz besonders bevorzugt handelt es sich bei den Anionenaustauschern enthaltend Polystyrol-Copolymere mit funktionellen Gruppen der Formel (II) um makroporöse, Styrol/Divinylbenzol vernetzte Copolymerisate, bei denen R¹ Wasserstoff ist.

Die Anionenaustauscher enthaltend Polystyrol-Copolymere mit funktionellen Gruppen der Formel (II), die in dem Verfahren zur Adsorption von Kohlendioxid eingesetzt werden, besitzen vorzugsweise einen mittleren Partikeldurchmesser von 200 µm bis 650 µm.

Die Anionenaustauscher enthaltend Polystyrol-Copolymere mit funktionellen Gruppen der Formel (II), die in dem Verfahren zur Adsorption von Kohlendioxid eingesetzt werden, besitzen vorzugsweise eine Oberfläche von 40 bis 60 m²/g gemessen nach der BET Oberflächenbestimmungsmethode DIN ISO 9277.

Die Funktionalisierung der nach dem Stand der Technik erhältlichen Polystyrol-Copolymerisate zu Anionenaustauschern enthaltend Polymere mit funktionellen Gruppen der Formel (II) ist dem Fachmann ebenfalls aus dem Stand der Technik bekannt.

Die Funktionalisierung kann z.B. durch das sogenannte Phthalimidverfahren erfolgen, bei dem zunächst das vernetzte Polystyrol-Copolymerisat mit Phthalimidderivaten amidomethyliert und das amidomethylierte Polystyrol-Copolymerisat durch alkalische Hydrolyse zu einem Anionenaustauscher enthaltend Polystyrol-Copolymere mit funktionellen Gruppen der Formel (II) mit primären Aminogruppen umgesetzt wird. In diesem Fall ist R¹ Wasserstoff. Dieser kann dann durch Alkylierung zu Anionenaustauschern mit sekundären Aminogruppen umgesetzt werden.

Die Funktionalisierung mittels des Phthalimidverfahrens gehört ebenfalls zum Stand der Technik und ist z.B. in der EP-B-1078688 beschrieben.

Die Funktionalisierung kann aber ebenfalls durch Chlormethylierung und anschließende Aminierung erfolgen. Zur Herstellung von Anionenaustauschern mit primären und/oder sekundären Aminogruppen wird dann das chlormethylierte Perlpolymerisat mit Ammoniak, einem primären Amin, wie Methyl- oder Ethylamin oder einem sekundären Amin, wie Dimethylamin, umgesetzt.

Die Konzentration der primären Aminogruppen beträgt vorzugsweise 0,2 bis 3 mol/l im Anionenaustauscher enthaltend Polystyrol-Copolymerisate mit funktionellen Gruppen der Formel (II). Besonders bevorzugt beträgt die Konzentration der primären Aminogruppen im Anionenaustauscher enthaltend Polystyrol-Copolymerisate mit funktionellen Gruppen der Formel (II) 1,0 bis 2,5 mol/l.

Ganz besonders bevorzugt enthält der Anionenaustauscher enthaltend Polystyrol-Copolymerisate mit funktionellen Gruppen der Formel (II) primäre Aminogruppen.

Die Herstellung von makroporösen Anionenaustauschern enthaltend Polystyrol-Copolymerisate mit funktionellen Gruppen der Formel (II) erfolgt bevorzugt nach dem sogenannten Phthalimidverfahren, indem man
a) Monomertröpfchen aus mindestens Styrol und Divinylbenzol sowie einem Porogen und mindestens einen Initiator, zu einem makroporösen, vernetzten Polystyrol-Copolymerisat umsetzt,
b) dieses makroporöse, vernetzte Polystyrol-Copolymerisat mit Phthalimidderivaten amidomethyliert und
c) das amidomethylierte Polymerisat zu einem Anionenaustauscher enthaltend Polystyrol-Copolymerisat mit funktionellen Gruppen der Formel (II) bei denen R¹ = H ist, umsetzt.

Geeignete Initiatoren sind beispielsweise Peroxyverbindungen wie Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azobis(isobutyronitril) oder 2,2'-Azobis(2-methylisobutyronitril).

Die Initiatoren werden vorzugsweise in Mengen von 0,05 bis 2,5 Gew.-%, besonders bevorzugt von 0,1 bis 1,5 Gew.-%, bezogen auf die Monomeren-Mischung, angewendet.

Als weitere Zusätze werden zur Herstellung Anionenaustauschern enthaltend Polystyrol-Copolymerisate mit funktionellen Gruppen der Formel (II) Porogene verwendet, um im Polymerisat eine makroporöse Struktur zu erzeugen. Hierfür sind organische Lösungsmittel geeignet, die das entstandene Polymerisat schlecht lösen bzw. quellen - (Fällmittel für Polymere). Vorzugsweise seien Hexan, Octan, Isooctan, Isododecan, Methylethylketon, Butanol oder Octanol und deren Isomeren genannt. Besonders bevorzugt wird Isododecan als Porogen eingesetzt.

Die Anionenaustauscher enthaltend Polystyrol-Copolymerisate mit funktionellen Gruppen der Formel (II) liegen nach ihrer Herstellung üblicherweise in einer wässrigen Lösung vor. Durch Trocknung kann ein beliebiger Wassergehalt eingestellt werden. Der Wassergehalt der Anionenaustauscher enthaltend Polystyrol-Copolymerisate mit funktionellen Gruppen der Formel (II) kann aber ebenfalls durch das in Kontakt bringen mit einem wasserhaltigen Gasstrom eingestellt werden. Vorzugsweise erfolgt die Einstellung des Wassergehaltes durch Trocknung.

Der Wassergehalt im Anionenaustauscher enthaltend Polystyrol-Copolymerisate mit funktionellen Gruppen der Formel (II) kann mit Hilfe einer Trockenwaage ermittelt werden. Das bedeutet, dass der feuchte Anionenaustauscher enthaltend Polystyrol-Copolymerisate mit funktionellen Gruppen der Formel (II) mit Infrarotlicht erwärmt wird, bis keine Massenabnahme mehr festzustellen ist oder der gewünschte Feuchtigkeitsgehalt eingestellt wurde. Daraus kann der Anteil von Restfeuchtigkeit rechnerisch ermittelt werden. Soll der Wassergehalt während der Aufnahme von Kohlendioxid bestimmt werden, erfolgt die Bestimmung in der Regel aus der Massenbilanz nach dem Durchbruch des Wasserdampfes aus der Menge der gesamten Feuchtigkeit und des Feuchtigkeitsgehaltes des Anionenaustauschers enthaltend Polystyrol-Copolymerisate mit funktionellen Gruppen der Formel (II).

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

### Adsorption von Kohlendioxid

Die in dem Verfahren zur Adsorption von CO₂ eingesetzten Anionenaustauscher enthaltend Polystyrol-Copolymerisate mit funktionellen Gruppen der Formel (II) weisen bevorzugt einen Wassergehalt von 0 Gew.% bis 40 Gew.%, besonders bevorzugt von 1 Gew.% bis 20 Gew.%, bezogen auf die Gesamtmasse des Anionenaustauschers enthaltend Polystyrol-Copolymerisate mit funktionellen Gruppen der Formel (II), auf. Ganz besonders bevorzugt weist der Anionenaustauschers enthaltend Polystyrol-Copolymerisate mit funktionellen Gruppen der Formel (II) einen Wassergehalt von 0,1 Gew. % bis 3 Gew. % auf.

Besonders bevorzugt weisen die makroporösen, Anionenaustauscher enthaltend Polystyrol-Copolymerisate mit funktionellen Gruppen der Formel (II) bei denen R¹ = Wasserstoff ist, einen Wassergehalt von 1 Gew.% bis 40 Gew.% bezogen auf die Gesamtmasse der Anionenaustauscher auf.

Bevorzugt werden Anionenaustauscher enthaltend Polystyrol-Copolymerisate mit funktionellen Gruppen der Formel (II) mit Kohlendioxid enthaltenden Gasen in Kontakt gebracht und zu Anionenaustauscher enthaltend Polystyrol-Copolymerisate mit funktionellen Gruppen der Formel (I) umgesetzt.

Die Gase können dabei z.B. ein industrielles Gas sein, wie vorzugsweise Rauchgas oder Abgas aus der Verbrennung von Kohlenwasserstoffen, Erdgas, Synthesegas, gecracktes Gas oder Biogas. Besonders bevorzugt erfolgt die Adsorption mit Kohlendioxid in Gegenwart von Luft.

Die Gase enthalten vorzugsweise 0,1 Vol. % bis 60 Vol. % Kohlendioxid. Besonders bevorzugt enthalten die Gase, die zur Adsorption von Kohlendioxid an dem Anionenaustauscher enthaltend Polystyrol-Copolymerisate mit funktionellen Gruppen der Formel (II) eingesetzt werden 25 Vol. % bis 60 Vol. % Kohlendioxid bezogen auf das Gesamtvolumen der eingesetzten Gase.

Das Gas enthält vorzugsweise 0 Vol.% bis 40 Vol.% Wasser. Besonders bevorzugt ist der Wassergehalt des Gases 0,1 Vol.% bis 20 Vol.%.

Die Adsorption und Umsetzungen von Kohlendioxid enthaltenden Gasen mit den Anionenaustauscher enthaltend Polystyrol-Copolymerisate mit funktionellen Gruppen der Formel (II) erfolgt vorzugsweise bei Temperaturen von 0 °C bis 30 °C.

Die Adsorption und Umsetzungen von Kohlendioxid enthaltenden Gasen mit den Anionenaustauscher enthaltend Polystyrol-Copolymerisate mit funktionellen Gruppen der Formel (II) kann bei beliebigen Drücken erfolgen.

Die Beladung des Anionenaustauschers enthaltend Polystyrol-Copolymerisate mit funktionellen Gruppen der Formel (II) erfolgt bei einem Durchfluss vorzugsweise von 100 Bettvolumen pro Stunde bis 300 Bettvolumen pro Stunde.

Bevorzugt ist der Anionenaustauscher enthaltend Polystyrol-Copolymerisate mit funktionellen Gruppen der Formel (I) mit 0,2 bis 3,0 mol CO₂ pro kg getrocknetem Anionenaustauscher beladen.

### Desorption von Kohlendioxid

Die Desorption wird im erfindungsgemäßen Verfahren durch Temperaturerhöhung mittels Mikrowellenstrahlung durchgeführt. Für die Erzeugung von Mikrowellenstrahlung werden vorzugsweise Laufzeitröhren, Klystrons, Wanderfeldröhren und Magnetrons eingesetzt.

Das technisch am häufigsten für die Mikrowellenerwärmung verwendete Gerät ist das Magnetron. Vorzugsweise wird ein Magentron zur Erzeugung der Mikrowellen für die Erwärmung des Anionenaustauschers mit funktionellen Gruppen der Formel (I) eingesetzt. Die eingesetzte Frequenz der Mikrowellenstrahlung beträgt vorzugsweise 2 bis 3 GHz, besonders bevorzugt 2,4 bis 2,5 GHz. Die Energie der Mikrowellenstrahlung zur Erwärmung des Anionenaustauschers mit funktionellen Gruppen der Formel (I) beträgt vorzugsweise 1 kW bis 1000 kW. Die für die Regeneration des Anionenaustauscher mit funktionellen Gruppen der Formel (I) notwendige Temperatur ist vorzugsweise 50°C bis 180°C. Optional kann Vakuum während der Regeneration angelegt werden um den CO₂ Partialdruck zu reduzieren und die Desorption von CO₂ zu begünstigen. Die bei der Regeneration möglichen Drücke betragen vorzugsweise 10 ⁻³ mbar bis Normaldruck. Die Regeneration zum Anionenaustauscher enthaltend Polystyrol-Copolymerisate mit funktionellen Gruppen der Formel (II) erfolgt vorzugsweise in einem Zeitraum von 30 min bis 60 min.

Ganz besonders bevorzugt weist der Anionenaustauschers enthaltend Polystyrol-Copolymerisate mit funktionellen Gruppen der Formel (I) einen Wassergehalt von 0,1 Gew. % bis 3 Gew. % auf.

Das erfindungsgemäße Verfahren ermöglicht erstmals eine effiziente Desorption von Kohlendioxid aus Anionenaustauschers enthaltend Polystyrol-Copolymerisate mit funktionellen Gruppen der Formel (I).

### Beispiele

### Beispiel 1

Es wurde ein makroporöser, vernetzter, Anionenaustauscher enthaltend Styrol / Divinylbenzol-Copolymerisate mit funktionellen Gruppen der Formel (II), mit einem Gehalt an primären Amingruppen 1,0 bis 2,5 mol/l und einem Vernetzungsgrad von 2 % bis 10 % und einem Porendurchmesser von 100 bis 550 Angström eingesetzt. Der Anionenaustauscher wurde getrocknet und enthielt 2 % Wasser bei seinem Einsatz.

In dem durchgeführten Laborversuch wurde der Anionenaustauscher mit funktionellen Gruppen der Formel (II) in einer Quarzglassäule in einen Mikrowellenversuchsreaktor eingebracht. Dabei bestand der Mikrowellenversuchsreaktor aus einem hohlen Edelstahlzylinder in dem die Quarzglassäule angebracht wurde, so dass mit Hilfe einer Mikrowellenantenne, die ebenfalls im Inneren des Edelstahlzylinders in einem Abstand von 7 cm von der Quarzglassäule angebracht war, der Ionenaustauscher mit Mikrowellen bestrahlt werden konnte. Zudem sieht die Konstruktion vor, dass innerhalb des Mikrowellenreaktors und der Quarzglassäule ein Vakuum erzeugt werden kann. Die verwendete Quarzglassäule zeigt eine sehr niedrige Mikrowellenabsorption (tan αδ x 10³) im Bereich von 5 - 7.

Es wurden 15 ml (7,5 g) Anionenaustauscher enthaltend Styrol / Divinylbenzol-Copolymerisate mit funktionellen Gruppen der Formel (II) eingesetzt und mit einem kontinuierlichen Strom aus 50 Vol.-% CO₂ und 50 Vol.-% Luft (Eingangskonzentration) mit einem Durchsatz von gesamt 3 l/h (spezifische Geschwindigkeit 200 BV/h) in Kontakt gebracht. Die Beladung mit CO₂ beträgt 2,0 mol/kg an getrocknetem Anionenaustauscher.

Nach Beladung des Anionenaustauschers mit funktionellen Gruppen der Formel (II) mit CO₂ unter atmosphärischen Bedingungen wurde das Harz anschließend durch Anlegen eines Vakuums von 0,1 mbar und durch die Erwärmung des Adsorbers auf 90°C durch Mikrowellenstrahlung zu 100 % regeneriert. Die Regeneration wurde für einen Zeitraum von 40 min durchgeführt, danach konnte keine CO₂ Abgabe mehr gemessen wurden.

Die adsorbierte CO₂ Menge wurde vollständig wieder von dem Ionenaustauscher abgegeben.

Gemäß J. Krupka, T. Zychowicz, V.Bovtun, and S. Veljko, "Complex Permittivity Measurements of Ferroelectrics Employing Composite Dielectric Resonator Technique", IEEE Transactions on Ultrasonics, Ferroelectrics and Frequency Control, pp.1883-1888, vol. 53, No 10, October 2006 wurde die reale Dielektrizitätskonstante ε' und die komplexe Dielektrizitätskonstante ε" von einem mit CO₂ gesättigtem, getrocknetem Anionenaustauscher enthaltend Polystyrol-Copolymerisate mit funktionellen Gruppen der Formel (I), bei Raumtemperatur gemessen, um daraus den Mikrowellenabsorptionskoeffizienten (tan αδ x 10³) zu berechnen. Beide Dielektrizitätskonstanten ins Verhältnis gesetzt, bilden als Verlustwinkel tan αδ = ε"/ε' ein Maß für die Fähigkeit einer Schüttung eines Anionenaustauschers Mikrowellenstrahlung zu adsorbieren und damit erhitzt zu werden. Dieser beträgt überraschenderweise 34,4 tan αδ x 10³ und ist dadurch deutlich höher als dies für Polystyrol zu erwarten gewesen wäre (0,3 tan αδ x 10³, Quelle: Meredith R.J. (1998), Engineers' Handbook of Industrial Microwave Heating, Exeter, S. 29 The Institution of Engineering and Technology, London, United Kingdom, Lightening Source UK Ltd., Printed in UK by Short Run Press Ltd..

Der Anionenaustauscher enthaltend Polystyrol-Copolymerisate mit funktionellen Gruppen der Formel (I) erlaubt daher eine Erwärmung und Regeneration mittels Mikrowellenstrahlung.

## Patentansprüche

1. Verfahren zur Desorption von Kohlenstoffdioxid von mindestens einem Anionenaustauscher enthaltend Polystyrol-Copolymere mit funktionellen Gruppen der Formel (I) 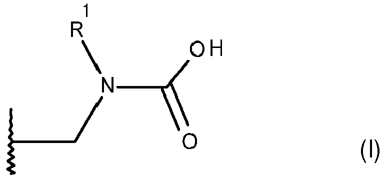 wobei 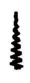 ein Polystyrol-Copolymergerüst darstellt und
R¹ für C₁-C₆-Alkyl und/oder H stehen kann, und die Methylengruppe in der Formel (I), die an dem Stickstoffatom gebunden ist, an einem aromatischen Rest in dem Polystyrol-Copolymeren gebunden ist, durch Temperaturerhöhung mittels Mikrowellenstrahlung und optional durch Druckreduktion.

2. Verfahren gemäß Anspruch, **dadurch gekennzeichnet, dass** R¹ für Methyl, Ethyl, n-Propyl, s-Propyl, n-Butyl, s-Butyl, t-Butyl und Wasserstoff steht.

3. Verfahren gemäß einem der Ansprüche 1 bis 2, **dadurch gekennzeichnet**, **dadurch gekennzeichnet, dass** das Polystyrol-Copolymergerüst des Anionenaustauschers enthaltend Polystyrol-Copolymere mit funktionellen Gruppen der Formel (I) ein Styrol / Divinylbenzol vernetztes Copolymer darstellt.

4. Verfahren gemäß Anspruch 1 bis 3, **dadurch gekennzeichnet, dass** der Anionenaustauscher enthaltend Polystyrol-Copolymere mit funktionellen Gruppen der Formel (I) ein Perlpolymerisat aufweist, dessen Porendurchmesser 100 bis 550 Angström ist.

5. Verfahren gemäß mindestens einem der Ansprüche 1 bis 4, **dadurch gekennzeichnet, dass** in dem Anionenaustauscher enthaltend Polystyrol-Copolymere mit funktionellen Gruppen der Formel (I) R¹ = Wasserstoff ist.

6. Verfahren gemäß mindestens einem der Ansprüche 1 bis 5, **dadurch gekennzeichnet, dass** der Anionenaustauscher enthaltend Polystyrol-Copolymere mit funktionellen Gruppen der Formel (I) 0,2 bis 3,0 mol CO₂ pro kg getrocknetem Anionenaustauscher enthält.

7. Verfahren gemäß mindestens einem der Ansprüche 1 bis 6, **dadurch gekennzeichnet, dass** die Desorption bei Temperaturen von 50°C bis 180°C durchgeführt wird.

8. Verfahren gemäß mindestens einem der Ansprüche 1 bis 7, **dadurch gekennzeichnet**, die Desorption bei Drücken von 10⁻³ mbar bis Normaldruck durchgeführt wird.

9. Verfahren gemäß mindestens einem der Ansprüche 1 bis 8, **dadurch gekennzeichnet, dass** die Energie der Mikrowellenstrahlung von 1 kW bis 1000 kW beträgt.

10. Verfahren gemäß mindestens einem der Ansprüche 1 bis 9, **dadurch gekennzeichnet, dass** der Anionenaustauscher der Formel (I) durch Umsetzung von einem Anionenaustauscher enthaltend Polystyrol-Copolymeren mit funktionellen Gruppen der Formel (II) 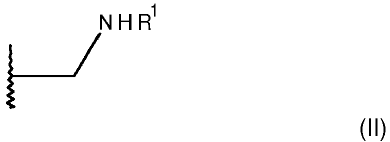 wobei 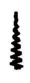 und R¹ die oben genannte Bedeutung haben, mit Kohlendioxid, hergestellt wird.

11. Verfahren gemäß Anspruch 10, **dadurch gekennzeichnet, dass** Kohlendioxid enthaltende Gase adsorbiert werden.

12. Verfahren gemäß Anspruch 11, **dadurch gekennzeichnet, dass** die Gase, 0,1 Vol. % bis 60 Vol. % Kohlendioxid enthalten, bezogen auf das Gesamtvolumen der eingesetzten Gase.

13. Verfahren gemäß mindestens einen der Ansprüche 11 bis 12, **dadurch gekennzeichnet, dass** der Wassergehalt des Gases 0,1 Vol.% bis 20 Vol.% ist.

14. Verfahren gemäß mindestens einem der Ansprüche 10 bis 13, **dadurch gekennzeichnet, dass** der Wassergehalt der Anionenaustauscher enthaltend Polystyrol-Copolymerisate mit funktionellen Gruppen der Formel (II) 1 Gew.% bis 20 Gew.% bezogen auf die Gesamtmasse der Anionenaustauscher aufweist.

15. Verfahren gemäß mindestens einem der Ansprüche 10 bis 14, **dadurch gekennzeichnet, dass** die Adsorption des Kohlendioxids an dem Anionenaustauscher enthaltend Polystyrol-Copolymerisate mit funktionellen Gruppen der Formel (II) bei Temperaturen von 0 °C bis 30 °C erfolgt.
